Europäisches Patentamt

European Patent Office

Office européen des brevets

(11) Veröffentlichungsnummer : **0 022 923**
**B1**

(19)

# EUROPÄISCHE PATENTSCHRIFT

(12)

(45) Veröffentlichungstag der Patentschrift :
16.02.83

(21) Anmeldenummer : 80103152.7

(22) Anmeldetag : 06.06.80

(51) Int. Cl.³ : **C 08 B 11/08, C 08 B 17/06**

(54) **Kontinuierliches Verfahren und Vorrichtung zur Herstellung von wasserlöslicher Hydroxyalkylcellulose oder deren Mischethern.**

(30) Priorität : 15.06.79 DE 2924330

(43) Veröffentlichungstag der Anmeldung :
28.01.81 Patentblatt 81/04

(45) Bekanntmachung des Hinweises auf die Patenterteilung : 16.02.83 Patentblatt 83/07

(84) Benannte Vertragsstaaten :
AT BE DE FR GB IT NL SE

(56) Entgegenhaltungen :
DE A 2 636 935
DE B 2 400 879
DE C 905 611
GB A 415 383
US A 3 278 521

(73) Patentinhaber : HOECHST AKTIENGESELLSCHAFT
Postfach 80 03 20
D-6230 Frankfurt/Main 80 (DE)

(72) Erfinder : Hilbig, Josef, Dr.
Seifer Weg 3a
D-6204 Taunusstein 4 (DE)
Erfinder : Holst, Arno, Dr.
Drususstrasse 3
D-6200 Wiesbaden (DE)
Erfinder : Künkler, Hans
Weinfeldstrasse 15
D-6200 Wiesbaden (DE)
Erfinder : Stölting, Klaus
Am Hohen Stein 6
D-6200 Wiesbaden (DE)
Erfinder : Schminke, Wolfgang, Dr.
Weinfeldstrasse 22
D-6200 Wiesbaden (DE)

Jouve, 18, rue St-Denis, 75001 Paris, France

# Kontinuierliches Verfahren und Vorrichtung zur Herstellung von wasserlöslicher Hydroxyalkylcellulose oder deren Mischethern

Die Erfindung betrifft ein kontinuierliches Verfahren zur Herstellung von wasserlöslicher Hydroxyalkylcellulose oder deren wasserlöslichen Mischethern auf der Basis von Hydroxyalkylcellulose und eine Vorrichtung zu dessen Durchführung.

Zu den bereits seit langem auf vielen technischen Gebieten eingesetzten Celluloseethern zählen auch die wasserlöslichen Hydroxyalkylcellulosen (HAlkC) und deren Mischether, wie Hydroxyethylcellulose (HEC), Hydroxypropylcellulose (HPC), Hydroxyethyl-hydroxypropylcellulose (HEHPC), Hydroxyethyl-methylcellulose (HEMC) oder Hydroxyethylcarboxymethylcellulose (HECMC) ; die Eigenschaften, Herstellungsverfahren und Anwendungsgebiete dieser Celluloseether sind beispielsweise in Ullmanns Encyklopädie der technischen Chemie, Verlag Chemie — Weinheim, 4. Auflage, Band 9, 1975, Stichwort « Celluloseäther », Seiten 192 bis 212 dargestellt.

Zur Herstellung von HEC wird beispielsweise ausgeführt, daß ein kontinuierliches Verfahren bekannt ist (Ullmann s. o., Seite 206) bei dem 2 bis 8 % Ethylenoxid aufgenommen werden, das allerdings nur zu nichtwasserlöslichen Produkten führt. Höhere Veretherungsgrade sollen zu einer pastenartigen Konsistenz der Produkte führen, wodurch die Verarbeitung in den Herstellungsaggregaten erschwert werde. Die bisher bekannten Verfahren zur Herstellung von wasserlöslicher Hydroxyalkylcellulose und deren Mischethern werden deshalb normalerweise diskontinuierlich als Aufschlämm (« Slurry »)-Verfahren unter Anwesenheit von inerten organischen Lösemitteln wie Isopropanol, tert.-Butanol oder Aceton durchgeführt.

In der GB-PS 482 885 wird ein kontinuierliches Verfahren zur Herstellung niedrigsubstituierter, wasserunlöslicher, alkalilöslicher Celluloseether wie MC, CMC oder HEC beschrieben, bei dem ein gelöstes Veretherungsmittel in einer Menge von 0,1 bis 2 Mol unter alkalischen Bedingungen drucklos mit Alkalicellulose zur Reaktion gebracht wird.

Das kontinuierliche Verfahren zur Herstellung wasserunlöslicher, alkalilöslicher Hydroxyethylcellulose gemäß der GB-PS 782 842, der DE-As 12 51 729 oder der US-PS 2 847 411 wird mit gasförmigem Ethylenoxid als Veretherungsreagens so durchgeführt, daß 2 bis 8 Gew.-% an Ethylenoxid, bezogen auf das Cellulosegewicht, zur Reaktion gelangen. Eine ähnliche Verfahrensweise mit einem Ethylenoxidanteil von weniger als 2 Gew.-% beschreibt die GB-PS 817 809.

Aus der DE-PS 765 441 ist ein kontinuierliches Verfahren zur Veretherung von Cellulose bekannt, bei dem Alkalicellulose in Ein- oder Mehrschneckenvorrichtungen mit flüssigen organischen Veretherungsmitteln zur Reaktion gebracht wird ; als einziges Beispiel für ein Veretherungsmittel wird Benzylchlorid genannt.

In der DE-AS 11 74 304 (= US-PS 3 131 177) wird ein diskontinuierliches Verfahren zur Herstellung von wasserlöslicher Hydroxyalkylcellulose (HAlkC) beschrieben, bei der eine in einem wassermischbaren Keton (z.B. Aceton) aufgeschlämmte Cellulose mit einem Alkylenoxid in Gegenwart von Alkali und Wasser umgesetzt wird. Das zweistufige Veretherungsverfahren wird so durchgeführt, daß man a) zunächst bei einem Mengenverhältnis von 0,2 bis 0,8 Gew.-Teilen NaOH und 0,8 bis 4,0 Gew.-Teilen Wasser auf 1 Gew.-Teil Cellulose die Veretherung bei etwa 80°C bis zu einem molaren Substitutionsgrad (MS) von 1,0 durchführt, b) 70 bis 98% des Alkalis neutralisiert, und c) die Veretherung bis zu einem MS von 1,5 bis 3,0 fortsetzt. Eine ähnliche diskontinuierliche, zweistufige Veretherungsweise wird auch in der DE-AS 11 77 127 (= US-PS 3 131 176) beschrieben.

Das diskontinuierliche Verfahren zur Herstellung von Hydroxyethylcellulose (HEC) gemäß der DE-AS 15 18 979 (= GB-PS 1 038 757) wird mit einem Gemisch aus Isopropanol und tert.-Butanol als Dispergier (Aufschlämm)mittel durchgeführt, wobei der Anteil des Isopropanols im Gemisch zwischen 2 und 25 Gew.-% beträgt. Die Standardbedingungen in diesem Verfahren werden so gewählt, daß a) ein Gemisch aus Dispergiermittel, Wasser, NaOH und Cellulose bei 30°C während 30 min erzeugt wird, b) in dieses in einem Reaktor befindliche Gemisch Ethylenoxid eingeleitet wird, c) während 30 min eine Temperatur bis auf 50 °C eingestellt und während 90 min diese gehalten wird, d) die Temperatur auf 80 °C erhöht und diese während 30 min gehalten wird, und e) das Reaktionsgefäß abgekühlt, das NaOH neutralisiert, das Rohprodukt mit 80 %igem wäßrigem Aceton und abschließend mit wasserfreiem Aceton gereinigt und das gereinigte Produkt bei weniger als 90 °C getrocknet wird. Die Mengenanteile (in Gew.-Teilen) der Komponenten betragen (bezogen auf 1 Gew.-Teil trockene Cellulose) : 2 bis 50 Teile Dispergiermittel, 0,05 bis 10 Teile NaOH und 1,2 bis 2,5 Teile Wasser ; als Hydroxyethylierungsmittel werden Ethylenoxid, 2,3-Epoxypropanol-1, Epichlorhydrin, Butadienmonoxid und Ethylenchlorhydrin genannt. Das Verfahren soll sowohl zur Herstellung von wasserlöslicher HEC eines MS von 1,5 bis 2,5 als auch von wasserlöslicher HEC eines MS von kleiner als 1,0 geeignet sein.

Aus der DE-AS 15 43 007 (= US-PS 3 296 247) sind eine Hydroxyethyl-hydroxypropylcellulose (HEHPC) mit einem $MS_{HE}$ von 0,05 bis 1,0 und einem $MS_{HP}$ von 2 bis 10, die in kaltem Wasser und polaren organischen Lösemitteln löslich, in heißem Wasser unlöslich und thermoplastisch ist, und ein diskontinuierliches Verfahren zu ihrer Herstellung bekannt. Die Veretherungsmittel Ethylenoxid und Propylenoxid werden gleichzeitig bei etwa 70 °C in einem verschlossenen Druckkessel zur Reaktion gebracht.

Es sind auch bereits kontinuierliche Verfahren zur Herstellung von wasserlöslichen Celluloseethern bekannt geworden, insbesondere zur Herstellung von Carboxymethylcellulose (CMC), Methylcellulose (MC) und Methyl-hydroxyalkylcellulose (MHAlkC).

In der DE-AS 15 43 136 (= US-PS 3 544 556) wird ein Verfahren zur kontinuierlichen Herstellung von Methylcellulose (MC) oder Methylhydroxyalkylcellulose (MHAlkC) beschrieben, bei dem Alkalicellulose mit überschüssigem flüssigem Methylchlorid bzw. einem Gemisch von flüssigem Methylchlorid und flüssigem Alkylenoxid in Gegenwart von ebenfalls flüssigem Dimethylether bei erhöhter Temperatur umgesetzt wird. Von den veretherenden flüssigen Komponenten wird das 5- bis 10 fache des Gewichts der in der Alkalicellulose enthaltenden trockenen Cellulose und dazu 2 bis 30 Gew.-% Dimethylether, bezogen auf eingesetztes Methylchlorid, eingesetzt, wobei der Dimethylether nur durch Nebenreaktionen aus dem Methylchlorid entsteht. Das Verfahren weist die folgenden Stufen auf : a) man bringt das Gemisch aus Alkalicellulose, Veretherungsmittel und Dimethylether unmittelbar nach dem Eintritt in ein Reaktionsrohr auf 70° bis 95 °C, b) man führt das Umsetzungsgemisch kontinuierlich im Gleichstrom durch das Rohr, das mit einer Förderschnecke versehen ist und mit einem Wärmemantel, dessen flüssiges Austauschmedium im Gegenstrom zum Umsetzungsgemisch fließt, c) man kondensiert im Rohr entstehenden Methylchloriddampf, um das Umsetzungsgemisch auf der erforderlichen Temperatur zu halten, d) man schleust das Umsetzungsgemisch kontinuierlich aus, e) man wäscht das ausgeschleuste Umsetzungsgemisch unter Entspannung im Gleichstrom mit Wasser von 75 bis 95 °C, wobei man die als Gase entweichenden Komponenten wieder kondensiert und in dem Maße und unter Einsatz der verbrachten Veretherungsmittel zurückführt, daß sich in dem durch das Reaktionsrohr strömenden Reaktionsgemisch ein konstanter, im genannten Bereich liegender Gehalt an Dimethylether einstellt, und f) man isoliert die MC oder MHAlkC in üblicher Weise.

Aus der DE-AS 24 00 879 (= US-PS 4 017 671) ist ein Verfahren zur kontinuierlichen Herstellung des Natriumsalzes der Carboxymethylcellulose (NaCMC) bekannt, bei dem man ein Veretherungsgemisch, das anfänglich aus fein zerkleinertem Zellstoff und Natronlauge gebildete Alkalicellulose, Na-monochloracetat und Wasser enthält, bei wenigstens in allen Teilabschnitten des Reaktionsraumes konstant gehaltener Temperatur von mindestens 60 °C derart durch einen Reaktionsraum fördert, daß die Verweilzeit des Veretherungsgemisches in dem Reaktionsraum ausreicht, um das darin anfänglich enthaltene Na-monochloracetat umzusetzen. Das Verfahren weist die folgenden Merkmale auf : a) es wird ein Veretherungsgemisch durch den Reaktionsraum gefördert, das auf 1 Gew.-Teil Zellstoff, 0,2 bis 0,6 Gew.-Teile NaOH, 0,5 bis 1,75 Gew.-Teile Na-monochloracetat, 7 bis 22 Gew.-Teile Isopropylalkohol und 1,4 bis 11 Gew.-Teile Wasser enthält, b) die konstanten Temperaturen des Veretherungsgemisches werden im Reaktionsraum im Gebiet von 60° bis 90 °C gehalten, c) die Scherkräfte werden auf das Veretherungsgemisch vor seinem Eintritt in den Reaktionsraum und bei einer unter 30 °C gelegenen Temperatur mittels eines Homogenisators zur Einwirkung gebracht, d) die Verweilzeit des Veretherungsgemisches in der Homogenisierungszone beträgt weniger als 1/10 seiner Verweilzeit in dem Reaktionsraum, und e) nach beendeter Veretherung werden die flüssigen Bestandteile des Veretherungsgemisches von seinen festen Bestandteilen auf mechanischem Wege abgetrennt.

Das Verfahren zur Herstellung von Polysaccharidethern gemäß der DE-OS 26 36 935 (= US-PS 4 015 067) wird so durchgeführt, daß man a) eine Aufschlämmung aus einem feinverteilten Polysaccharid, einem wäßrigen Alkalimetallhydroxid und mindestens einem veretherenden Mittel in Abwesenheit von freiem Sauerstoff und bei einer Temperatur bereitet, bei der die Reaktion des Alkalipolysaccharids mit dem veretherenden Mittel unter Kontrolle gehalten wird, b) die Aufschlämmung annähernd kontinuierlich in einem Röhrenreaktor einführt, der frei ist von Hindernissen, die den Fluß der Aufschlämmung hindern könnten, c) die Temperatur der Aufschlämmung auf einen Wert einstellt, bei dem eine kontrollierte Reaktion des oder der veretherenden Mittel(s) mit dem Alkalipolysaccharid unter Erzielung der gewünschten Substitution des Alkalipolysaccharids durch das veretherende Mittel erfolgt, und d) die Reaktion während einer Zeitdauer von 10 bis 180 min fortsetzt, wobei die Aufschlämmung durch den Reaktor geführt wird. Als repräsentatives Polysaccharid wird Cellulose genannt, es soll auch eine Reaktion mit Alkylenoxiden als Veretherungsmittel in einer Menge von 2 bis 20 Gew.-Teilen (insbesondere 6 bis 12 Gew.-Teilen), bezogen auf 1 Gew.-Teil an Cellulose, möglich sein.

Die aus dem Stand der Technik bekannten Verfahren weisen aber insbesondere folgende Nachteile auf :

— Die kontinuierlich durchgeführten Verfahren zur Herstellung von HEC führen nur zu einer wasserunlöslichen, alkalilöslichen HEC, d. h. unter den dort angewendeten Verfahrensbedingungen ist nur eine Veretherung zu niedrigen Veretherungsgraden möglich, bei denen die dabei entstehende HEC noch nicht wasserlöslich wird.

— Die diskontinuierlich durchgeführten Verfahren zur Herstellung von wasserlöslicher HAlkC, insbesondere HEC, führen zwar zu in der Technik verwertbaren Produkten, sie lassen sich jedoch nicht ohne weiteres auf eine kontinuierliche Verfahrensweise umstellen, weil dann ein gleichmäßiger Reaktionsablauf, der für ein gutes Löseverhalten der entstehenden Produkten entscheidend ist, nicht mehr gewährleistet wäre.

— Die kontinuierlich durchgeführten Verfahren zur Herstellung der wasserlöslichen Celluloseether CMC, MC oder MHAlkC lassen nicht ohne weiteres auch eine Herstellung von HAlkC oder Mischethern auf Basis von HAlkC zu, da sie beispielsweise drucklos ausgeführt werden (CMC) und damit andersartige Anforderungen an die Verfahrensweise und die Anlagenkonzeption stellen, oder da das Gemisch aus Veretherungsmittel und Alkalicellulose (MC, MHAlkC) im wesentlichen ohne Anwesenheit größerer Mengen eines inerten, organischen Lösemittels ohne entscheidende Einbußen an die Qualitätsanforderungen umgesetzt werden kann, und dieses Gemisch bereits nach Durchlaufen einer relativ einfachen Homogenisierungsstufe zur Reaktion gebracht wird. Insbesondere die beiden letztgenannten Verfahrensparameter Durchführung des Verfahrens in einer Lösemittel enthaltenden Aufschlämmung und intensives und wirksames Homogenisieren vor Durchführung der eigentlichen Veretherungsreaktion erfordern aber besondere Maßnahmen in der Verfahrensführung und in der Anlagenkonzeption.

— In der bereits weiter oben aufgeführten DE-OS 26 36 935 wird zwar erwähnt, daß nach dem kontinuierlichen Verfahren auch eine Umsetzung von Cellulose mit Epoxiden wie Ethylen-, Propylen- oder Butylenoxid möglich sei, (Seite 11, Absätze 2/3), jedoch sind des weiteren nur konkrete Angaben für eine Verfahrensführung mit Monohalogenalkanen wie Methyl-, Ethyl-, Propyl- oder Butylchlorid zu den Alkylcellulosen oder insbesondere zusätzlich mit Alkylenoxiden zu den entsprechenden Mischethern zu finden. Eine vollkontinuierliche Verfahrensweise ist nicht vorgesehen, denn (Seite 4, Absatz 3 der DE-OS) die Vorwärtsbewegung der Aufschlämmung wird zur Temperatursteuerung des Verfahrensablaufs gelegentlich unterbrochen, außerdem wird die Steuerung des Verfahrens auch über die Zuführung einzelner Reaktionskomponenten in den Röhrenreaktor bewirkt (Seite 6, Absatz 1). Zur Menge des veretherenden Mittels und des inerten Verdünnungsmittel wird ausgeführt, daß davon etwa das Zehn- bis Zwanzigfache des Gewichts der Cellulose eingesetzt werden soll (Seite 8, Absatz 2 der DE-OS und Seite 11, Absätze 2/3 der DE-OS).

Aufgabe der Erfindung ist es deshalb, ein kontinuierliches Verfahren zur Herstellung von Hydroxyalkylcellulose oder deren Mischethern vorzuschlagen, das eine vollkontinuierliche Verfahrensweise im eigentlichen Veretherungsreaktionsteil zuläßt, ohne allzu große Mengen an organischen Lösemitteln und/oder Veretherungsmittel(n) durchgeführt werden kann und Produkte liefert, die bezüglich ihres Viskositäts- und Lösungsverhaltens (Größe und Bereich der Viskosität ; Fasergehalt, Quellkörpergehalt und Transparenz der wäßrigen Lösungen) mit solchen nach modernen diskontinuierlichen Verfahren hergestellten Produkten mindestens vergleichbar sind.

Die Erfindung geht aus von einem Verfahren zur Herstellung von wasserlöslicher Hydroxyalkylcellulose oder einem wasserlöslichen Mischether auf Basis von Hydroxyalkylcellulose aus einer Aufschlämmung von Cellulose, einem Alkalisierungs- und mindestens einem Veretherungsmittel in Anwesenheit von Wasser und mindestens einem inerten organischen Lösemittel. Das Verfahren wird kontinuierlich durchgeführt und ist dadurch gekennzeichnet, daß

a) eine Aufschlämmung aus

1 Gew.-Teil Cellulose
0,02 bis 0,6 Gew.-Teil Alkalimetallhydroxid
5 bis 10 Gew.-Teilen organischem Lösemittel
0,4 bis 2,5 Gew.-Teilen Wasser

und gegebenenfalls festen oder flüssigen Veretherungsmitteln bei Atmosphärendruck erzeugt wird,

b) diese Aufschlämmung einer für Überdruckbetrieb geeigneten Einrichtung zugeführt, dort mit mindestens einem bei Atmosphärendruck und bei Raumtemperatur gasförmigen, unter Druck verflüssigten Veretherungsmittel vermischt, und die Veretherung bei einer Temperatur bis zu 40 °C, einem Überdruck bis zu 3 bar und einer Verweilzeit von 15 bis 90 min in einem Bereich für den Substitutionsgrad von 0,2 bis 1,0 durchgeführt wird,

c) der Anteil des oder der gesamten Veretherungsmittel(s) von a und b 0,3 bis 3,2 Gew.-Teile pro Gew.-Teil Cellulose beträgt,

d) die Aufschlämmung von a und b mehrmals durch eine Homogenisiereinrichtung hindurch im Kreislauf umgewälzt wird,

e) die homogenisierte Aufschlämmung von b) einem eine Fördereinrichtung aufweisenden Röhrenreaktor zugeführt, und dort während 70 bis 180 min Verweilzeit, bei einer Temperatur von 30° bis 120 °C bei einem Überdruck bis zu 10 bar zur Reaktion gebracht wird, und

f) die Aufschlämmung von e aus dem Röhrenreaktor in eine Abkühleinrichtung überführt und anschließend aufgearbeitet wird.

Zu den wasserlöslichen Hydroxyalkylcellulosen und den Mischethern auf Basis von Hydroxyalkylcellulose zählen insbesondere die Hydroxyethylcellulose (HEC) Hydroxypropylcellulose (HPC), Hydroxyethyl-hydroxypropylcellulose (HEHPC), Hydroxyethyl-methylcellulose (HEMC), Hydroxyethyl-ethylcellulose (HEEC), Hydroxyethyl-hydroxypropylmethylcellulose (HEHPMC) und Hydroxyethyl-carboxymethylcellulose (HECMC), wobei bei Anwesenheit eines Substituenten, der keine Hydroxyalkylgruppe trägt oder ist (z. B. Carboxymethyl-, Methyl- oder Ethyl-), der Substitutionsgrad dieses Substituenten höchstens etwa 1,0 beträgt. Bevorzugt werden nach dem erfindungsgemäßen Verfahren HEC oder HECMC hergestellt.

Die eingesetzte Cellulose ist entweder natürlicher Herkunft, beispielsweise Baumwoll-Linters oder Holz-Zellstoff, oder liegt in regenerierter Form wie als Cellulosehydrat vor ; die Teilchengröße der Cellulose sollte vor Beginn der Alkalisierung möglichst kleiner als etwa 1 mm, insbesondere kleiner als etwa 0,75 mm sein.

Das Alkalimetallhydroxid — üblicherweise NaOH — wird in fester oder zweckmäßiger in gelöster Form als wäßrige Alkalimetallhydroxid-Lösung einer Konzentration von 2 bis 60 Gew.-% eingesetzt. Als organische Lösemittel werden bevorzugt Isopropanol, Aceton, Hexan, tert.-Butanol oder Gemische dieser Lösemittel eingesetzt, wobei diese auch bereits mit Wasser vermischt sein können. Die angegebene Zusammensetzung der Aufschlämmung in a gibt lediglich die Summe der darin nachweisbaren Bestandteile zu Beginn des Verfahrens an, selbstverständlich ist z. B. bereits nach einem bestimmten Zeitraum die Cellulose teilweise in Alkalicellulose übergegangen. Zu dieser ersten bei Atmosphärendruck durchführbaren Verfahrensstufe (Alkalisierung) können zur Herstellung von bestimmten Hydroxyalkylcellulosen oder Mischethern auf Basis von Hydroxyalkylcellulose bereits bei Atmosphärendruck und Raumtemperatur (20° bis 25 °C) feste oder flüssige Veretherungsmittel, beispielsweise Na-monochloracetat, Monochloressigsäure, Propylenoxid oder Lösungen von ihnen zugegeben werden. Die bei Atmosphärendruck und Raumtemperatur gasförmigen Veretherungsmittel wie Ethylenoxid werden erst nach Überführung der Aufschlämmung in eine für Überdruck geeignete Vorrichtung in unter Druck verflüssigter Form zugesetzt. Dabei werden die Reaktionsbedingungen so gewählt, daß die Cellulose zunächst nur teilweise verethert (Anveretherung) wird, wobei ein Bereich von 0,2 bis 1,0 für den Substitutionsgrad erzielt werden soll. Unter dem Begriff « Substitutionsgrad » ist bei Hydroxyalkylsubstituenten oder anderen zur Mehrfachsubstitution befähigten Veretherungsmitteln der MS, bei nicht zur Mehrfachsubstitution befähigten Veretherungsmitteln der DS und bei mehreren verschiedenen Substituenten (z. B. HE und CM) ist darunter auch die Summe aus den MS- oder DS-Werten der verschiedenen Substituenten zu verstehen.

In bevorzugten Ausführungsformen des erfindungsgemäßen Verfahrens wird in der Alkalisierungsstufe eine Aufschlämmung aus 1 Gew.-Teil Cellulose, 0,2 bis 0,4 Gew.-Teilen Alkalimetallhydroxid, 6 bis 8 Gew.-Teilen organischem Lösemittel und 1,0 bis 2,1 Gew.-Teilen Wasser erzeugt und beträgt der Anteil des Veretherungsmittels in der Alkalisierungs- und/oder Anveretherungsstufe 0,6 bis 2,0 Gew.-Teile pro Gew.-Teil Cellulose.

Die Aufschlämmung der Anveretherungsstufe b wird in einer weiteren Ausgestaltung der Erfindung in mindestens einer weiteren für Überdruckbetrieb geeigneten Einrichtung bei einer Temperatur bis zu 40 °C, einem Überdruck bis zu 3 bar und einer Verweilzeit von 15 bis 90 min bis zum Erreichen eines Substitutionsgrades von 0,5 bis 1,5 zur Reaktion gebracht. Dabei kann der Aufschlämmung in mindestens einer der für Überdruckbetrieb geeigneten Einrichtungen weiteres Veretherungsmittel und/oder ein Modifizierungsmittel (beispielsweise ein Vernetzungsmittel) in flüssiger oder gelöster Form zugeführt werden.

Die Aufschlämmungen der Alkalisierungs-, Anveretherungs- und gegebenenfalls der Modifizierungsstufen werden jeweils durch eine Homogenisiereinrichtung hindurch im Kreislauf bis zu 250 mal pro Stunde umgewälzt und dann der jeweils nächsten Stufe zugeführt.

Die abschließende Veretherungsstufe in einem Röhrenreaktor wird zweckmäßig so durchgeführt, daß die Eingangstemperatur der Aufschlämmung bis zu 40 °C beträgt, dann die Temperatur der Aufschlämmung im ersten Teil des Röhrenreaktors während 30 bis 90 min Verweilzeit auf bis zu 60 °C angehoben und im weiteren Teil des Röhrenreaktors während der übrigen 40 bis 90 min Verweilzeit auf einer Temperatur von 60° bis 120 °C gehalten wird, wobei der Überdruck bis zu 5 bar beträgt. Der Füllungsgrad des Röhrenreaktors beträgt möglichst 100 %. Vor oder in dieser Veretherungsstufe können der Aufschlämmung ein oder mehrere zusätzliche Veretherungsmittelmengen und/oder Modifizierungsmittel zugesetzt werden. Die Veretherung kann bei Mischethern bis zu einem MS von 6,0 bzw. einem Gesamt-DS von 2,3 und bei Einfachethern bis zu einem MS von 4,5 bzw. einem DS von 1,3 durchgeführt werden. Nach Beendigung aller Veretherungsstufen wird die Aufschlämmung in einem Kühlrohr oder Kühlkessel abgekühlt, wobei diese im wesentlichen bei Atmosphärendruck betrieben werden.

Die weitere Aufarbeitung erfolgt nach bekannten Verfahrensstufen. Die Neutralisation der alkalischen Aufschlämmung kann vor, während oder nach der Abkühlstufe mit einer geeigneten Säure durchgeführt werden, es können auch Hilfsstoffe zur Konfektionierung des Celluloseethers (z. B. zum Bleichen oder zum Verbessern der Auflöseeigenschaften des gebildeten Celluloseethers wie Anquellverzögerer) zugegeben werden. Die abgekühlte Aufschlämmung wird dann in den feuchten Feststoff (den Celluloseether) und den Großteil der flüssigen und in der Flüssigkeit gelösten Stoffe aufgetrennt, beispielsweise wird diese Auftrennung in einer Dekantier-Zentrifuge durchgeführt, wonach sich einerseits in der Regel eine weitere Reinigung des Celluloseethers z. B. mit wäßrigen organischem Lösemitteln und/oder reinen organischen Lösemitteln und eine Trocknung bis zum gewünschten Trocknungsgrad anschließt, andererseits aber auch eine Aufarbeitung der abgetrennten flüssigen Reaktionskomponenten, beispielsweise eine Redestillation der organischen Lösemittel, nachgeschaltet werden kann.

Eine zur Durchführung des erfindungsgemäßen Verfahrens geeignete Vorrichtung ist gekennzeichnet durch

g) eine unter Atmosphärendruck betriebene Einrichtung mit Rührer zur Durchführung der Alkalisierung der Cellulose,

h) mindestens eine unter Überdruck betriebene Einrichtung mit Rührer zur Durchführung der teilweisen Veretherung und/oder gegebenenfalls der Modifizierung der Cellulose,

i) Einrichtungen zur Umwälzung der jeweiligen Aufschlämmung durch einen Homogenisator hindurch, wobei je eine dieser Einrichtungen und je einer der Homogenisatoren einer der Einrichtungen zur Durchführung der Alkalisierung, Veretherung und/oder der Modifizierung zugeordnet sind und die jeweilige Aufschlämmung im Kreislauf umwälzen,

k) einen aus mehreren Rohren bestehenden Röhrenreaktor zum Temperieren der Aufschlämmung über einen Mantel, und zur Beendigung der Veretherung der Cellulose,

l) eine Einrichtung zur Abkühlung der aus dem letzten Rohr des Röhrenreaktors entnommenen Aufschlämmung und Verbindungsleitungen zwischen den Vorrichtungsteilen g bis l.

Insbesondere weisen im Vorrichtungsteil k das erste Rohr des Röhrenreaktors ein nicht-förderndes, homogenisierendes Rührwerk und die übrigen Rohre des Röhrenreaktors eine fördernde Einrichtung auf. Das Verhältnis der Länge der Rohre des Röhrenreaktors zu ihrem Durchmesser beträgt zweckmäßig 10 bis 200 zu 1, bevorzugt 20 bis 100 zu 1. Zweckmäßig dienen die Homogenisatoren im Vorrichtungsteil i gleichzeitig zum Pumpen der umzuwälzenden Aufschlämmung und sind dann beispielsweise als Stiftoder Zahnscheibenmühlen ausgebildet. Es ist jedoch auch möglich, den Vorrichtungsteil i so auszustatten, daß zusätzlich zum Homogenisator auch eine Pumpe in der Umwälzeinrichtung eingebaut ist, die üblicherweise in beiden Varianten jeweils am Boden der Vorrichtungsteile g und h in Form einer Nebenleitung (« Bypass ») beginnt und am oberen Ende dieser Vorrichtungsteile die Aufschlämmung wieder in diese zurückgibt, wodurch die jeweilige Aufschlämmung ständig durch den Homogenisator hindurch umgewälzt wird. Die Rohre des Röhrenreaktors im Vorrichtungsteil k und im gegebenenfalls rohrförmig ausgebildeten Vorrichtungsteil e weisen bevorzugt jeweils einen mehrfach unterteilten Mantel auf, dessen einzelne Abschnitte unabhängig voneinander aufgeheizt oder gekühlt (temperiert) werden können.

Es ist zwar möglich, daß einzelne Stufen des erfindungsgemäßen Verfahrens und/oder einzelne Teile der erfindungsgemäßen Vorrichtung bereits bekannt sind, dies gilt jedoch nicht für die Kombination aller Einzelmerkmale, die es erstmals ermöglicht, ein voll-kontinuierliches Verfahren zur Herstellung von wasserlöslichen Hydroxyalkylethern oder deren Mischethern, insbesondere von HEC oder HECMC, aber auch von chemischen Modifikationen, wie beispielsweise einem quaternären Ammoniumsalz der HECMC, auszuführen. Die Kombination der hintereinandergeschalteten Vorrichtungsteile g und h mit dem Röhrenreaktor erlaubt eine sehr präzise Beherrschung der Veretherungsreaktion (Druck, Temperatur), und damit ist auch die Erzielung hoher Veretherungsgrade und hoher Viskositäten möglich. Die Veretherung erfolgt sehr gleichmäßig, da einerseits die Veretherung stufenweise erfolgt, andererseits die Rückvermischung verschieden-stark veretherter Cellulosepartikel stark vermindert wird. Die Zumischung der verschiedensten Chemikalien kann an mehreren Stellen der Vorrichtung erfolgen, womit das Verfahren und die Vorrichtung sehr anpassungsfähig zur Erzeugung vieler Varianten am Celluloseethermolekül (Mischether, Vernetzungen usw.) und/oder zur Konfektionierung des Celluloseethers (Anquellverzögerung, Auflösehilfen) eingesetzt werden können. Die fördernde Einrichtung im Röhrenreaktor kann auch temperiert werden. Durch die spezielle Konstruktion und Umdrehungseinstellung der fördernden Einrichtung wird bei der durch den Röhrenreaktor geförderten Aufschlämmung eine Rückvermischung nahezu vollständig vermieden. Durch die möglichst 100 %ige Füllung des Röhrenreaktors können einerseits hohe Durchsätze erzielt werden, andererseits wird so zusätzlich die Rückströmung von Teilen der Aufschlämmung vermindert. Die Möglichkeit der Verfahrensweise im geschlossenen System in Kombination mit Spülungen durch Inertgase wie Stickstoff kann die Depolymerisation der Cellulose durch Luftsauerstoff-Einfluß zurückdrängen.

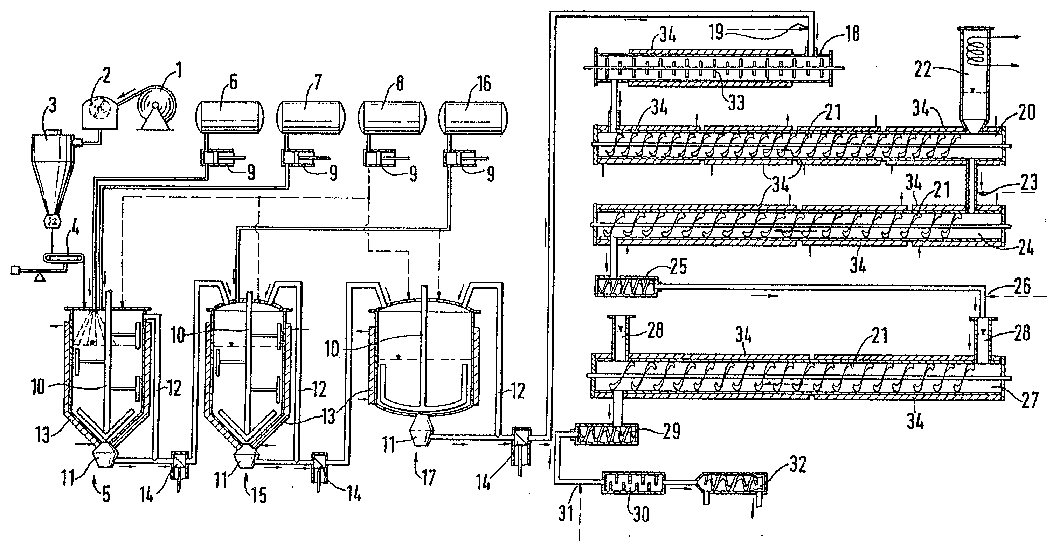

Im folgenden werden das erfindungsgemäße Verfahren und die erfindungsgemäße Vorrichtung anhand der Zeichnung zusätzlich erläutert :

Ein als Rolle angelieferter Baummwoll-Linters oder Holz-Zellstoff (1) wird vollkontinuierlich in einer Mühle (2) zerkleinert oder defibrilliert, über einen Zyklon (3) auf eine Bandwaage (4) befördet und von dieser vollkontinuierlich in einen oben offenen Rührkessel (5) dosiert. Gleichzeitig werden eine wäßrige NaOH-Lösung (6), ein organisches Lösemittel (7) und eventuell weitere Chemikalien (8), aus Vorratsbehältern mit Hilfe von Dosiereinrichtungen (9), insbesondere Pumpen, vollkontinuierlich dem Rührkessel (5) zugeführt. Die wäßrige NaOH-Lösung und das inerte organische Lösemittel können gleichzeitig über eine gemeinsame Düse oder separate Düsen auf die Oberfläche des Kesselinhaltes gesprüht werden.

Der Kessel (5) hat einen Rührer (10), eine Homogenisierpumpe (11) und einen Bypass (12), über die der Kesselinhalt ständig umgepumpt und homogenisiert wird. Mit Hilfe des Mantels (13) wird der Kesselinhalt auf der gewünschten Temperatur gehalten. Mit der Dosiereinrichtung (14) wird aus dem Bypass vollkontinuierlich ein Teilstrom entnommen und in den Druck-Rührautoklaven (15) gepumpt, der vergleichbare Einrichtungen (10, 11, 12, 13 und 14) wie der vorangegangene Kessel (5) hat, dies gilt ebenso für die möglichen nachfolgenden Druck-Rührautoklaven.

In den Rührautoklaven (15) werden das verflüssigte Veretherungsmittel (16) — beispielsweise Ethylenoxid — und eventuell weitere Chemikalien oder Veretherungsmittel zudosiert und die Anveretherung bis zum gewünschten Grad durchgeführt.

Über die Dosiereinrichtung (14), beispielsweise eine Pumpe, wird ein Teilstrom kontinuierlich in den Rührautoklaven (17) gegeben, wo weitere Veretherungs- oder Modifizierungsmittel zugemischt werden können. Der Rührautoklav (17) ist in der Zeichnung mit einem anderen Querschnitt dargestellt, um zu verdeutlichen, daß es bei diesen Kesseln oder Autoklaven nicht auf die Form, sondern auf das Prinzip : Rührer plus Homogenisier-Umpumpung ankommt. Nach Erreichen des angestrebten Veretherungsgrades in der Rührkessel-Rührautoklav-Kaskade — wobei weitere Rührautoklaven der gleichen Art wie dargestellt benutzt werden können — wird die Aufschlämmung kontinuierlich in den Röhrenreaktor gepumpt. Vor Eintritt in das erste Rohr des Röhrenreaktors können an der Stelle (19) weitere Chemikalien dem Strom der Aufschlämmung kontinuierlich zugeführt werden. Das erste Rohr (18) des Röhrenreaktors enthält ein mit 50 bis 600 Upm laufendes Paddel-Rührwerk (33), das nicht fördert, sondern nur homogenisiert. Beim Durchströmen dieses Rohres wird die Aufschlämmung aufgeheizt, was bis zum Ende des zweiten Rohres (20) fortgesetzt wird. Das Rohr (20) ist wie alle nachfolgenden Rohre mit einer bandförmigen temperierbaren Wendel (21) ausgerüstet, deren Fördergeschwindigkeit möglichst genau der theoretischen mittleren Strömungsgeschwindigkeit der Aufschlämmung im Rohr entspricht, womit eine Rückströmung (Rückvermischung) vermieden wird. Das Rohr (20) ist mit einem Ausdehnungsgefäß (22) versehen, das über das Niveau des ersten Rohres hinausragt und wie ein Windkessel funktioniert, d. h. eventuell auftretende Druckschwankungen im Röhrenreaktor dämpfen kann.

Das Ausdehnungsgefäß (22) kann temperiert werden, und sämtliche Rohre haben einen mehrfach unterteilten Mantel (34), dessen Abschnitte unabhängig voneinander temperiert werden können. Vom Rohr (20) zum Rohr (24) gelangt die Aufschlämmung entweder durch die Schwerkraft und den Strömungsdruck oder durch eine Pumpe (wie am Ausgang des Röhrenreaktors). Am Eingang (23) des Rohres (24) können weitere Chemikalien zugeführt werden. Beim Durchströmen des Rohres (24) wird die Aufschlämmung entweder noch weiter erwärmt oder auf einer konstanten Reaktionstemperatur gehalten, was von der Gesamtverweilzeit und der Zahl der Rohre des Röhrenreaktors abhängig ist. Der Füllstand im Röhrenreaktor ist so, daß — vom Ausdehnungsgefäß (22) abgesehen — alle Rohre zu 100 % gefüllt sind. Aus dem letzten Rohr (24) des Röhrenreaktors wird die Aufschlämmung mit dem bis zum gewünschten Grad veretherten Celluloseether mittels einer Pumpe (25) kontinuierlich so abgepumpt, daß der Füllstand im Röhrenreaktor unverändert bleibt. Am Eingang (26) der beispielsweise als Rohr ausgebildeten Kühlstrecke (27) können der Aufschlämmung weitere Chemikalien (z. B. ein Anvernetzungsmittel wie Glyoxal) zugeführt werden, die dem gebildeten Celluloseether beispielsweise bestimmte Lösungseigenschaften (Anquellverzögerung) geben sollen. Das Kühlrohr (27) enthält eine Rühr-Einrichtung (21), die als Wendel ausgebildet sein kann und die Aufschlämmung fördern und mischen soll. Das Kühlrohr ist — wie die anderen Rohre — zu 100 % gefüllt und hat zwei als Ausdehnungsgefäße dienende Aufsätze (28) und wird über den Mantel (34) temperiert. Aus dem Kühlrohr wird die Aufschlämmung kontinuierlich mittels einer Pumpe (29) so abgepumpt, daß der Füllstand im Kühlrohr konstant bleibt. In der Förderleitung ist hinter der Pumpe (29) eine Mischstrecke (30) angeordnet, wobei es sich um einen sogenannten statischen Mischer (z. B. « Kenics-Mixer ») handeln kann. Unmittelbar vor diesen Mischer werden die zur Neutralisation bestimmten Säuren (31) in die Förderleitung dosiert. Die Mischstrecke (30) kann auch hinter der Pumpe (25) vor dem Kühlrohr (27) angeordnet werden. Es können auch mehrere solcher Mischstrecken eingebaut werden, z. B. um die Aufschlämmung mit den zudosierten Chemikalien zu vermischen, beispielsweise bei der Stelle (26). Von der Pumpe (29) wird die Aufschlämmung durch die Mischstrecke (30) auf die Dekantier-Zentrifuge (32) gefördert, wo der in faseriger Form suspendiert vorliegende Celluloseether von den flüssigen Bestandteile der Aufschlämmung abgetrennt wird. Der rohe, feuchte Celluloseether wird anschließend nach bekannten Methoden, z. B. durch Auswaschen mit wäßrigen, organischen Lösemitteln von den anhaftenden Nebenprodukten befreit und in seine verkaufsfähige Form gebracht.

Um einen Abbau des Cellulose- und/oder Celluloseethermoleküls zu vermeiden, kann an verschiedenen Stellen der Vorrichtung mit Stickstoff gespült werden ; so kann beispielsweise der erste Kessel (5) oder die Kühlstrecke (27) mit Stickstoff überlagert werden.

Der molare Veretherungsgrad « MS » ist definiert als die an das Anhydroglucose-Grundmolekül angelagerte mittlere Anzahl Moleküle Alkylenoxid, wobei der MS die Zahl drei übersteigen kann. Der Veretherungsgrad « DS » bezeichnet im Gegensatz dazu die mittlere Anzahl der substituierten Hydroxylgruppen des Anhydroglucose-Grundmoleküls und kann demnach maximal die Zahl drei erreichen. Die Viskositäten der hergestellten Celluloseether wurden mit dem Höppler-Kugelfall-Viskosimeter bei 20 °C in einer 2 %igen wäßrigen Lösung bestimmt. Die Qualität der Celluloseether wurde beurteilt, indem die Trübungen der 2 %igen wäßrigen Lösungen mit einem Trübungsmesser der Fa. Dr. B. Lange (in Skalenteilen) festgestellt wurde, wobei eine Trübung von bis zu 10 Skalenteilen noch als gut gilt. Außerdem wurde der Gehalt an Fasern und Quellkörpern in den Lösungen visuell bewertet.

Beispiel 1

Pro Stunde werden kontinuierlich 200 Gew.-Teile eines Holz-Zellstoffs in einer Siebkorb-Schneidmühle mit eingesetztem 400 μm-

Siebkorb gemahlen und in einen oben offenen, unter Atmosphärendruck stehenden Rührkessel gegeben. Gleichzeitig werden pro Stunde 180 Gew.-Teile einer 27 gew.-%igen, wäßrigen NaOH-Lösung gemeinsam mit 1 520 Gew.-Teilen eines wäßrigen, 87 gew.-%igen Isopropanols durch eine Düse auf die Oberfläche des Kesselinhaltes gesprüht. Der Kesselinhalt wird gerührt und außerdem ständig am Boden mittels einer pumpenden Zahnscheiben-Mühle (Homogenisator) abgesaugt und 80 mal pro Stunde durch einen Bypass, der im Deckel mündet, geführt. Der Kessel wird gekühlt, so daß die Temperatur 25 °C nicht übersteigt. Die mittlere Verweilzeit der Aufschlämmung beträgt in diesem Kessel 60 min. Mittels einer Pumpe wird aus dem Bypass kontinuierlich ein Teilstrom der Aufschlämmung so abgenommen, daß der Kessel-Füllstand konstant bleibt, und in einen Druck-Rührautoklaven gepumpt. Dieser ist wie der erste Kessel mit einem Rührer, einer Homogenisierpumpe und einem Bypass ausgestattet. Der Inhalt des Rührautoklaven passiert den Bypass 100 mal pro Stunde.

In diesen Druck-Rührautoklaven werden, stündlich 230 Gew.-Teile Ethylenoxid kontinuierlich zudosiert. Uber den Mantel wird in diesem Kessel eine Temperatur von 30 °C gehalten, der Überdruck übersteigt 0,5 bar nicht, die mittlere Verweilzeit beträgt 54 min. Aus dem Bypass wird mittels einer Pumpe kontinuierlich ein Teilstrom von 2 130 Gew.-Teilen/h abgenommen und in einen weiteren Druck-Rührautoklaven gegeben. Dieser hat zwar einen anderen Querschnitt als die ersten beiden Kessel, ist aber wie diese mit einem Rührer, einer Homogenisierpumpe und einem Bypass ausgestattet. Die Aufschlämmung wird 150 mal pro Stunde durch den Bypass geführt. Der Kesselinhalt wird auf 30 °C temperiert, die mittlere Verweilzeit beträgt 66 min, der Überdruck beträgt maximal 0,3 bar.

Aus dem Bypass wird mittels einer Dosierpumpe kontinuierlich ein Teilstrom, dessen Celluloseether eine Hydroxyethylcellulose eines $MS$ von 0,63 und einen $DS$ von etwa 0,40 aufweist, von 2 130 Gew.-Teilen/h entnommen und in einen Röhrenreaktor gepumpt, dessen Verhältnis der Rohre von Gesamtlänge zu Durchmesser 62 zu 1 ist. Das erste Rohr des Röhrenreaktors enthält eine Wendel, deren Steigung und Umdrehungszahl genau einer Förderleistung von 2 130 Gew.-Teilen/h entsprechen. Durch vier unabhängig voneinander beheizbare Mäntel wird die Reaktionsmasse so erwärmt, daß sie nach 50 min am Ende des Rohres eine Temperatur von 60 °C hat. Sie gelangt durch ein Verbindungsstück in ein unter dem ersten liegendes zweites Rohr, das wie das erste mit einer Wendel mit einer Förderung von 2 130 Gew.-Teilen/h ausgestattet ist. Mit Hilfe eines dreifach unterteilten Mantels wird die Reaktionsmasse in diesem zweiten Rohr auf der gleichbleibenden Temperatur von 75 °C gehalten, beide Rohre sind zu 100 % gefüllt. Das obere Rohr ist mit einem Dampfdom ausgestattet, an dem eine Füllstandskontrolle angebracht ist, der Überdruck im Röhrenreaktor beträgt im Mittel 0,7 bar. Nach einer Gesamtverweilzeit von 100 min werden kontinuierlich 2 130 Gew.-Teile/h der 75 °C heißen Aufschlämmung am Ende des unteren Rohres abgepumpt, um in das Kühlrohr gefördert zu werden. In der Rohrleitung dorthin passiert die Aufschlämmung einen statischen Mischer, an dessen Eingang stündlich 123 Gew.-Teile einer 62 gew.-%igen wäßrigen Salpetersäure zudosiert werden.

Das Kühlrohr ist mit einer Wendel ausgerüstet, die schnell läuft, um eine gute Durchmischung zu erreichen. Am Ende des Kühlrohres wird nach 50 min Verweilzeit die auf 25 °C abgekühlte und neutrale Aufschlämmung kontinuierlich abgepumpt und auf eine Dekantier-Zentrifuge gefördert, wo die in faseriger Form als Suspension vorliegende Hydroxyethylcellulose vom Großteil der flüssigen Bestandteile der Aufschlämmung abgetrennt wird. Die rohe, lösemittelfeuchte HEC wird anschließend nach bekannten Verfahren gereinigt und aufgearbeitet.

Eine über einen Zeitraum von 7 h stündlich entnommene Serie von Proben zeigt eine mittlere Viskosität von 23.000 mPa · s und eine Trübung von 3,9 Skalenteilen, mit dem Auge sind keine Fasern und nur wenige Quellkörper zu erkennen, der $MS_{HE}$ beträgt etwa $2,28 \pm 0,04$ und der $DS_{HE}$ etwa $1,11 \pm 0,01$, wobei diese Werte die Gleichmäßigkeit der Veretherung zeigen.

Beispiel 2

Pro Stunde werden kontinuierlich 190 Gew.-Teile eines Baumwoll-Linters in einer Siebkorb-Schneidmühle mit eingesetztem 250 μm-Siebkorb gemahlen und in einen oben offenen, unter Atmosphärendruck stehenden Rührkessel gegeben. Gleichzeitig werden pro Stunde 205 Gew.-Teile einer 29 gew.-%igen, wäßrigen NaOH-Lösung gemeinsam mit 1 500 Gew.-Teilen eines wäßrigen, 87 gew.-%igen Isopropanols durch eine Düse auf die Oberfläche des Kesselinhalts gesprüht. Aus einem Vorratsgefäß werden außerdem stündlich 80 Gew.-Teile einer Antioxidans-Lösung in den Kessel dosiert. Die Temperatur wird auf 20 °C gehalten. Die Homogenisierweise, Verweilzeit und kontinuierliche Überführung in den nachfolgenden ersten Druck-Rührautoklaven und die Homogenisierung in diesem werden wie im Beispiel 1 ausgeführt.

Der Aufschlämmung im ersten Druck-Rührautoklaven werden 281 Gew.-Teile Ethylenoxid pro Stunde zudosiert. Über den Temperier-Mantel wird die Temperatur auf 30 °C gehalten. Die mittlere Verweilzeit beträgt 60 min, und der Überdruck maximal 1,4 bar. Die Analyse des Kesselinhalts ergibt für die anveretherte Cellulose einen $MS_{HE}$ von 0,32 und einen $DS_{HE}$ von 0,21.

Aus dem Bypass des ersten Druck-Rührautoklaven werden kontinuierlich stündlich 2 256 Gew.-Teile mittels einer Pumpe entnommen und in einen zweiten Druck-Rührautoklaven dosiert, in den erneut 80 Gew.-Teile/h Antioxidans-Lösung zugegeben werden. Der zweite Druck-Rührautoklav ist nach dem Druck-Rührautoklaven des Beispiels 1 konstruiert, und es wird wie dort homogenisiert und temperiert. Die mittlere Verweilzeit beträgt 60 min und der maximale Überdruck 0,7 bar. Die Analyse des Kesselproduktes ergibt für das Zwischenprodukt einen $MS_{HE}$ von 0,70 und einen $DS_{HE}$ von 0,45.

Aus dem Bypass des zweiten Druck-Rührautoklaven wird mittels einer Dosierpumpe kontinuierlich ein Teilstrom von 2 336 Gew.-Teilen/h entnommen und in einen Röhrenreaktor gepumpt, bei dem das Verhältnis der Länge aller Rohre zu ihrem Durchmesser 75 : 1 ist. Das erste Rohr enthält ein mit 150 Umdrehungen/min laufendes Paddel-Rührwerk, das nicht fördert, sondern die eingepumpte Aufschlämmung nur homogenisiert. Von diesem ersten Rohr gelangt die Reaktionsmasse über ein Verbindungsstück in ein zweites, und von diesem in ein drittes Rohr. Das zweite und das dritte Rohr enthalten eine Wendel, deren Umdrehungszahl und Steigung genau der Förderleistung von 2 336 Gew.-Teilen/h entsprechen. Die Rohre werden mittels mehrfach unterteilter Heiz- bzw. Kühlmäntel so temperiert, daß am Ende des ersten Rohres die mit 30 °C eintretende Reaktions-Suspension auf 40 °C aufgeheizt ist, am Ende des zweiten Rohres eine Temperatur von 60 °C herrscht, und im dritten Rohr bereits kurz nach dem Eingang bis zum Ende eine durchschnittliche Temperatur von rund 80 °C gehalten wird. Die Verweilzeiten betragen im ersten Rohr 20 min und in den zwei anderen Rohren je 50 min. Der Füllungsgrad der Rohre wird mit Hilfe eines Ausdehnungs-Dampfdomes am zweiten Rohr auf etwa 100 % gehalten, der Überdruck beträgt maximal 2,5 bar.

Am Ende des letzten Rohres werden 2 336 Gew.-Teile/h der heißen Aufschlämmung kontinuierlich abgepumpt und in ein weiteres Rohr zum Abkühlen gefördert. Auf dem Weg dorthin passiert die Aufschlämmung eine in die Förderleitung eingebaute Mischeinrichtung. In dieser Mischeinrichtung wird die Aufschlämmung stündlich mit 160 Gew.-Teilen einer 30 gew.-%igen wäßrigen HCl-Lösung und ca. 10 Gew.-Teilen 100 %iger Essigsäure intensiv vermischt.

Das zum Kühlen benutzte Rohr ist wie die vorhergehenden Reaktionsrohre mit einer Förderwendel ausgestattet, die in der Abkühleinrichtung relativ schnell läuft, so daß die damit einhergehende erhebliche Rückvermischung zur schnelleren Abkühlung und Ausgleichung eventueller pH-Wert-Schwankungen der Aufschlämmung ausgenutzt wird. Der pH-Wert der neutralen Aufschlämmung liegt durchschnittlich bei 6. Wie im Beispiel 1 wird die abgekühlte, neutrale Aufschlämmung am Ende des Kühlrohres kontinuierlich abgepumpt und weiterbehandelt. Eine über einen Zeitraum von 9 h stündlich entnommene Serie von Proben zeigt eine mittlere Viskosität von 160.000 mPa · s und eine Trübung von 9 Skalenteilen, mit dem Auge sind vereinzelte Fasern und nur wenige Quellkörper zu erkennen. Die Probenserie ergibt einen $MS_{HE}$ von 2,60 ± 0,03 und einen $DS_{HE}$ von 1,13 ± 0,01, was für eine sehr gleichmäßige Veretherung spricht.

Beispiel 3

Pro Stunde werde kontinuierlich 220 Gew.-Teile eines Holz-Zellstoffs in einer Siebkorb-Schneidmühle mit einem 750 μm-Siebkorb gemahlen und in einen Kessel nach Beispiel 1 gegeben. Gleichzeitig werden stündlich 188 Gew.-Teile einer 28 gew.-%igen NaOH-Lösung gemeinsam mit 1 580 Gew.-Teilen eines wäßrigen, 87 gew.-%igen Isopropanols über eine Düse auf die Oberfläche des Kesselinhalts gesprüht. Die Homogenisierung, Temperatureinstellung und Verweilzeit im ersten Kessel und die kontinuierliche Förderung in den nachfolgenden ersten Druck-Rührautoklaven werden wie im Beispiel 1 ausgeführt, nur die abgenommene Teilmenge besteht jetzt aus 1 988 Gew.-Teilen/h.

In den ersten Druck-Rührautoklaven werden stündlich 200 Gew.-Teile Ethylenoxid zugegeben und die Aufschlämmung wie im Beispiel 1 homogenisiert, temperiert und verweilen gelassen, der Überdruck beträgt maximal 0,7 bar. Die Analysen des Zwischenproduktes ergeben einen $MS_{HE}$ von 0,2 und einen $DS_{HE}$ von 0,1. Aus dem Bypass wird pro Stunde ein Teilstrom von 2 188 Gew.-Teilen kontinuierlich in einen zweiten Druck-Rührautoklaven nach den Angaben des Beispiels 1 abgepumpt und dort behandelt. Es stellt sich ein Überdruck von maximal 0,45 bar ein, die Veretherungsgrade für das Zwischenprodukt in dieser Stufe sind $MS_{HE} = 0,76$ und $DS_{HE} = 0,44$.

Aus dem Bypass des zweiten Druck-Rührautoklaven werden stündlich 2 188 Gew.-Teile der Aufschlämmung kontinuierlich entnommen und in einen Röhrenreaktor nach Beispiel 1 gepumpt und dort temperiert, gefördert und verweilen gelassen. Es stellt sich ein maximaler Überdruck von rund 2 bar ein.

Am Ende des dritten Rohres werden stündlich 2 188 Gew.-Teile der heißen Aufschlämmung kontinuierlich abgepumpt und in ein weiteres Rohr gefördert, das genauso konstruiert ist wie das dritte Rohr. In der Rohrleitung dorthin passiert die Aufschlämmung einen statischen Mischer, an dessen Eingang stündlich 45 Gew.-Teile einer 2,1 gew.-%igen wäßrigen $H_2O_2$-Lösung (zum Viskositätsabbau) zudosiert werden. Im nachfolgenden Rohr verbleibt die Aufschlämmung 50 min. Das Rohr wird so beheizt, daß eine Innentemperatur von 65 °C herrscht, die Umdrehungszahl und Steigung der Rohrwendel sind auf eine Förderleistung von 2 233 Gew.-Teilen/h eingestellt. Am Ende des Rohres werden stündlich kontinuierlich 2 233 Gew.-Teile der Aufschlämmung abgepumpt und nach Beispiel 2 über eine in der Rohrleitung eingebaute Mischeinrichtung in ein weiteres Rohr zum Abkühlen gefördert. Am Eingang der in die Rohrleitung eingebauten Mischeinrichtung werden stündlich 126 Gew.-Teile einer 30 gew.-%igen wäßrigen HCl-Lösung und 19 Gew.-Teile einer 100 %igen Essigsäure zudosiert. Am Ende des wie im Beispiel 2 zum Kühlen benutzten Rohres werden kontinuierlich 2 378 Gew.-Teile/h entnommen und wie im Beispiel 1 auf eine Dekantierzentrifuge gepumpt und weiterbehandelt.

Eine über einen Zeitraum von 6 h stündlich entnommene Proben-Serie ergibt, daß die Hydroxyethylcellulose eine durchschnittliche Viskosität von 21,5 mPa · s und eine Trübung von 2,4 Skalenteilen aufweist. Mit dem Auge sind keine Fasern oder Quellkörper zu erkennen. Die Veretherungsgrade betragen $MS_{HE} = 1,81 \pm 0,04$ und $DS_{HE} = 1,06 \pm 0,02$.

Beispiel 4

Pro Stunde werden kontinuierlich 196 Gew.-Teile eines Holz-Zellstoffs in einer Siebkorb-Schneidmühle mit einem 400 μm-Siebkorb gemahlen und in einen Kessel nach Beispiel 1 gegeben. Gleichzeitig werden stündlich 200 Gew.-Teile einer wäßrigen 30 gew.-%igen NaOH-Lösung über eine gemeinsame Düse zusammen mit 1 560 Gew.-Teilen/h eines 87 gew.-%igen wäßrigen Isopropanols auf die Oberfläche des Kesselinhalts gesprüht, und aus einem Vorratsgefäß 40 Gew.-Teile/h einer Antioxidans-Lösung zugepumpt. Außerdem werden über eine Dosier-Einrichtung für feste Schüttgüter (z. B. eine Dosier-Schnecke) aus einem Vorratsbunker stündlich 81 Gew.-Teile kristallines Na-monochloracetat zugegeben. Die Homogenisierung, Temperierung und Verweilzeit im ersten Kessel und die kontinuierliche Förderung in den nachfolgenden ersten Druck-Rührautoklaven werden nach Beispiel 1 ausgeführt, aber es werden stündlich 2 077 Gew.-Teile kontinuierlich aus dem Bypass entnommen.

Im ersten Druck-Rührautoklaven werden pro Stunde 230 Gew.-Teile Ethylenoxid zugegeben und nach Beispiel 1 homogenisiert, temperiert und verweilen gelassen, der Überdruck beträgt maximal 0,5 bar. Aus dem Bypass werden kontinuierlich 2 307 Gew.-Teile/h entnommen und wie in Beispiel 1 in einen zweiten Druck-Rührautoklaven gegeben und homogenisiert, temperiert und verweilen gelassen, es stellt sich ein Überdruck von maximal 0,5 bar ein.

Aus dem Bypass des zweiten Druck-Rührautoklaven werden stündlich 2 307 Gew.-Teile kontinuierlich in einen nach Beispiel 2 konstruierten Röhrenreaktor gepumpt und wie dort gefördert und verweilen gelassen. Die Temperierung des dritten Rohres wird jedoch auf eine maximale Temperatur von etwa 100 °C eingestellt, der Überdruck ergibt sich zu 1,2 bar.

Am Ende des dritten Rohres werden kontinuierlich 2 307 Gew.-Teile/h abgepumpt und in den Einrichtungen des Beispiels 2 neutralisiert, abgekühlt und aufgearbeitet. Zur Neutralisation werden vor der im Rohr eingebauten Mischvorrichtung stündlich 74 Gew.-Teile einer 62 gew.-%igen wäßrigen $HNO_3$-Lösung und 5,5 Gew.-Teile Essigsäure (100 %ig) zugegeben. Über einen Zeitraum von 12 h werden stündlich Proben der Hydroxyethyl-carboxymethylcellulose (HECMC) entnommen, eine Mischung der Proben und eine Einzelprobe werden untersucht. Die Mischung weist einen $MS_{HE}$ von 2,38 und einen $DS_{CM}$ von 0,40 auf, die Einzelprobe einen $MS_{HE}$ von 2,39 und einen $DS_{CM}$ von 0,40. Die Viskosität der salzfreien CMHEC beträgt etwa 5 000 mPa · s, die Trübung 9 Skalenteile, mit dem Auge sind keine Fasern und nur wenige Quellkörper zu erkennen.

## Ansprüche

1. Verfahren zur kontinuierlichen Herstellung von wasserlöslicher Hydroxyalkylcellulose oder einem wasserlöslichen Mischether auf Basis von Hydroxyalkylcellulose aus einer Aufschlämmung von Cellulose, einem Alkalisierungsmittel und mindestens einem Veretherungsmittel in Anwesenheit von Wasser und mindestens einem inerten, organischen Lösemittel, dadurch gekennzeichnet, daß

a) eine Aufschlämmung aus

    1  Gew.-Teil Cellulose,
    0,02 bis 0,6 Gew.-Teil Alkalimetallhydroxid,
    5  bis 10  Gew.-Teilen organischem Lösemittel,
    0,4 bis 2,5 Gew.-Teilen Wasser

und gegebenenfalls festen oder flüssigen Veretherungsmitteln bei Atmosphärendruck erzeugt wird,

b) diese Aufschlämmung einer für Überdruckbetrieb geeigneten Einrichtung zugeführt, dort mit mindestens einem bei Atmosphärendruck und bei Raumtemperatur gasförmigen, unter Druck verflüssigten Veretherungsmittel vermischt, und die Veretherung bei einer Temperatur bis zu 40 °C, einem Überdruck bis zu 3 bar und einer Verweilzeit von 15 bis 90 min in einem Bereich für den Substitutionsgrad von 0,2 bis etwa 1,0 durchgeführt wird,

c) der Anteil des oder der gesamten Veretherungsmittel(s) von a) und b) 0,3 bis 3,2 Gew.-Teile pro Gew.-Teil Cellulose beträgt,

d) die Aufschlämmung von a) und b) mehrmals durch eine Homogenisiereinrichtung hindurch im Kreislauf umgewälzt wird,

e) die homogenisierte Aufschlämmung von b) einem eine Fördereinrichtung aufweisenden Röhrenreaktor zugeführt, und dort während 70 bis 180 min Verweilzeit, bei einer Temperatur von 30° bis 120 °C, bei einem Überdruck bis zu 10 bar zu Reaktion gebracht wird, und

f) die Aufschlämmung von e) aus dem Röhrenreaktor in eine Abkühleinrichtung überführt und anschließend aufgearbeitet wird.

2. Verfahren nach Anspruch 1, dadurch gekennzeichnet, daß die Aufschlämmung von b) mit der bereits teilweise veretherten Cellulose in mindestens einer weiteren für Überdruckbetrieb geeigneten Einrichtung bei einer Temperatur bis zu 40 °C, einem Überdruck bis zu etwa 3 bar und einer Verweilzeit von 15 bis 90 min bis zum Erreichen eines Substitutionsgrades von 0,5 bis 1,5 zur Reaktion gebracht wird.

3. Verfahren nach Anspruch 2, dadurch gekennzeichnet, daß der Aufschlämmung in mindestens einer der für Überdruckbetrieb geeigneten Einrichtungen weiteres Veretherungsmittel und/oder ein Modifizierungsmittel in flüssiger oder gelöster Form zugeführt wird.

4. Verfahren nach einem der Ansprüche 1 bis 3, dadurch gekennzeichnet, daß in a) eine Aufschlämmung aus

1 Gew.-Teil Cellulose

0,2 bis 0,4 Gew.-Teil Alkalimetallhydroxid

6 bis 8 Gew.-Teilen organischem Lösemittel und

1,0 bis 2,1 Gew.-Teilen Wasser

erzeugt wird.

5. Verfahren nach einem der Ansprüche 1 bis 4, dadurch gekennzeichnet, daß in c) der Anteil des oder der Veretherungsmittel(s) von a) und b) 0,6 bis 2,0 Gew.-Teile pro Gew.-Teil Cellulose beträgt.

6. Verfahren nach einem der Ansprüche 1 bis 5, dadurch gekennzeichnet, daß in e) die Eingangstemperatur der Aufschlämmung bis zu 40 °C beträgt, die Temperatur der Aufschlämmung im ersten Teil des Röhrenreaktors während 30 bis 90 min Verweilzeit auf bis zu 60 °C angehoben und im weiteren Teil des Röhrenreaktors während der übrigen 40 bis 90 min Verweilzeit auf einer Temperatur von 60° bis 120 °C gehalten wird, wobei der Überdruck bis zu 5 bar beträgt.

7. Verfahren nach einem der Ansprüche 1 bis 6, dadurch gekennzeichnet, daß die gesamte Verweilzeit im Röhrenreaktor 90 bis 140 min beträgt.

8. Verfahren nach einem der Ansprüche 1 bis 7, dadurch gekennzeichnet, daß vor oder in e) der Aufschlämmung zusätzliche(s) Veretherungsmittel und/oder Modifizierungsmittel zugesetzt wird.

9. Verfahren nach einem der Ansprüche 1 bis 8, dadurch gekennzeichnet, daß in b) als Veretherungsmittel Ethylenoxid verwendet wird.

10. Verfahren nach einem der Ansprüche 1 bis 9, dadurch gekennzeichnet, daß in a) als Veretherungsmittel Monochloressigsäure, eines ihrer Salze oder Propylenoxid verwendet wird.

11. Vorrichtung zur Durchführung des Verfahrens nach einem oder mehreren der Ansprüche 1 bis 10, gekennzeichnet durch

g) eine unter Atmosphärendruck betriebene Einrichtung (5) mit Rührer (10) zur Durchführung der Alkalisierung der Cellulose,

h) mindestens eine unter Überdruck betriebene Einrichtung (15, 17) mit Rührer (10) zur Durchführung der teilweisen Veretherung und/oder gegebenenfalls der Modifizierung der Cellulose,

i) Einrichtungen (12) zur Umwälzung der jeweiligen Aufschlämmung durch einen Homogenisator (11) hindurch, wobei je eine dieser Einrichtungen (12) und je einer der Homogenisatoren (11) einer der Einrichtungen (5, 15, 17) zur Durchführung der Alkalisierung, Veretherung und/oder der Modifizierung zugeordnet sind und die jeweilige Aufschlämmung im Kreislauf umwälzen,

k) einen aus mehreren Rohren (18, 20, 24) bestehenden Röhrenreaktor zum Temperieren der Aufschlämmung über einen Mantel (34) und zur Beendigung der Veretherung der Cellulose,

l) eine Einrichtung (27) zur Abkühlung der aus dem letzten Rohr (24) des Röhrenreaktors entnommenen Aufschlämmung
und Verbindungsleitungen zwischen den Vorrichtungsteilen g) bis l).

12. Vorrichtung nach Anspruch 11, dadurch gekennzeichnet, daß das erste Rohr (18) des Röhrenreaktors ein nicht-förderndes, homogenisierendes Rührwerk (33) und die übrigen Rohre (20, 24) des Röhrenreaktors eine fördernde Einrichtung (21) aufweisen.

13. Vorrichtung nach Anspruch 11 oder 12, dadurch gekennzeichnet, daß das Verhältnis der Länge der Rohre des Röhrenreaktors zu ihrem Durchmesser 10 bis 200, insbesondere 20 bis 100, zu 1 beträgt.

14. Vorrichtung nach einem der Ansprüche 11 bis 13, dadurch gekennzeichnet, daß die Homogenisatoren (11) gleichzeitig zum Pumpen der umzuwälzenden Aufschlämmung dienen.

## Claims

1. A process for the continuous manufacture of water-soluble hydroxyalkylcellulose, or of a water-soluble mixed ether based on hydroxyalkylcellulose, from a slurry of cellulose, an alkalizing agent and at least one etherifying agent in the presence of water and at least one inert organic solvent, characterized in that

a) a slurry is produced from

1.0 part by weight of cellulose, 0.02 to 0.6 part by weight of an alkali metal hydroxide,

5.00 to 10.0 parts by weight of organic solvent,

0.40 to 2.5 parts by weight of water and,

if appropriate, solid or liquid etherifying agents under atmospheric pressure,

b) this slurry is fed to an apparatus suitable for operation under elevated pressure, and is mixed therein with at least one etherifying agent which is gaseous under atmospheric pressure and at room temperature and which has been liquefied under pressure, and the etherification is carried out at a temperature of up to 40 °C, under a gauge pressure of up to 3 bars and with a residence time of 15 to 90 minutes to give a degree of substitution in the range from 0.2 to about 1.0,

c) the proportion of the total etherifying agent(s) of a) and b) is 0.3 to 3.2 parts by weight per part by weight of cellulose,

d) the slurry of a) and b) is circulated several times in a loop through a homogenizing device,

e) the homogenized slurry is fed to a tubular reactor having a conveying device and said slurry is reacted in the reactor for a residence time of 70 to 180 minutes at a temperature from 30 to 120 °C and under a gauge pressure of up to 10 bars, and

f) the slurry of e) is transferred from the tubular reactor into a cooling device and is subsequently worked up.

2. A process as claimed in claim 1, characterized in that the slurry of b) with the already partially etherified cellulose, is reacted in at least one further apparatus suitable for operation under elevated pressure at a temperature of up to 40 °C, under a gauge pressure of up to about 3 bars and with a residence time of 15 to 90 minutes, until a degree of substitution of 0.5 to 1.5 is reached.

3. A process as claimed in claim 2, characterized in that etherifying agent and/or a modifying agent is fed in the liquid or dissolved form to the slurry in at least one of the apparatuses suitable for operation under elevated pressure.

4. A process as claimed in any of claims 1 to 3, characterized in that a slurry of

1.0 part by weight of cellulose,
0.2 to 0.4 part by weight of an alkali metal hydroxide,
6.0 to 8.0 parts by weight of organic solvent and
1.0 to 2.1 parts by weight of water

is produced in a).

5. A process as claimed in any of claims 1 to 4, characterized in that in c) the proportion of the etherifying agent(s) of a) and b) is 0.6 to 2.0 parts by weight per part by weight of cellulose.

6. A process as claimed in any of claims 1 to 5, characterized in that the inlet temperature of the slurry in e) is up to 40 °C, the temperature of the slurry is raised in the first part of the tubular reactor up to 60 °C during 30 to 90 minutes of residence time and a temperature of 60 to 120 °C is maintained in the further part of the tubular reactor during the remaining 40 to 90 minutes of residence time, the gauge pressure being up to 5 bars.

7. A process as claimed in any of claims 1 to 6, characterized in that the total residence time in the tubular reactor is 90 to 140 minutes.

8. A process as claimed in any of claims 1 to 7, characterized in that additional etherifying agent(s) and/or modifying agent(s) are added to the slurry before or in e).

9. A process as claimed in any of claims 1 to 8, characterized in that ethylene oxide is used as the etherifying agent in b).

10. A process as claimed in any of claims 1 to 9, characterized in that monochloracetic acid or one of its salts, or propylene oxide is used as the etherifying agent in a).

11. Equipment for carrying out the process as claimed in one ore more of claims 1 to 10, characterized by

g) an apparatus (5), operated under atmospheric pressure, with a stirrer (10) for carrying out the alkalization of the cellulose,

h) at least one apparatus (15, 17), operated under elevated pressure, with a stirrer (10) for carrying out the partial etherification and/or, if appropriate, the modification of the cellulose,

i) apparatuses (12) for circulating the particular slurry through a homogenizer (11), one of these apparatuses (12) and one of the homogenizers (11) being in each case associated with one of the apparatuses (5, 15, 17) for carrying out the alkalization, etherification and/or modification, and circulating the particular slurry in a loop,

k) a tubular reactor, consisting of several tubes (18, 20, 24), for adjusting the temperature of the slurry by means of a jacket (34) and for completing the etherification of the cellulose,

l) an apparatus (27) for cooling the slurry withdrawn from the last tube (24) of the tubular reactor, and connecting lines between the equipment parts g) to l).

12. Equipment as claimed in claim 11, characterized in that the first tube (18) of the tubular reactor has a non-conveying, homogenizing agitator (33) and the remaining tubes (20, 24) of the tubular reactor have a conveying device (21).

13. Equipment as claimed in claim 11 or 12, characterized in that the length/diameter ratio of the tubes of the tubular reactor is 10-200 to 1, in particular 20-100 to 1.

14. Equipment as claimed in any of claims 11 to 13, characterized in that the homogenizers (11) serve at the same time for pumping the slurry which is to be circulated.


## Revendications

1. Procédé en vue de la fabrication continue d'hydroxyalcoylcellulose soluble dans l'eau ou d'un éther complexe soluble dans l'eau, à base d'hydroxyalcoylcellulose, à partir d'une suspension composée de cellulose, d'un agent d'alcalinisation et d'au moins un agent d'éthérification, en présence d'eau et d'au moins un solvant organique inerte, lequel procédé est caractérisé en ce que :

a) une suspension composée de :

1 partie en poids de cellulose
0,02 à 0,6 partie en poids d'hydroxyde alcalin
5 à 10 parties en poids de solvant organique
0,4 à 2,5 parties en poids d'eau

et, le cas échéant, d'agents d'éthérification solides ou liquides est réalisée sous pression atmosphérique ;

b) cette suspension est dirigée sur une installation résistant à la pression manométrique pour y être mélangée à un agent d'éthérification au moins, qui, à la température ambiante et sous pression atmosphérique, se trouve à l'état gazeux et qui est liquéfié sous pression, et l'éthérification est réalisée à une température maximum de 40 °C, une pression maximum de 3 bars, pendant un temps de séjour de 15 à 90 minutes, aboutissant à un degré de substitution compris entre 0,2 et 1,0 ;

c) la fraction de l'agent d'éthérification ou la fraction de l'ensemble des agents d'éthérification cités sous a) et b) se situe entre 0,3 et 3,2 parties en poids rapportées à 1 partie en poids de cellulose ;

d) la suspension citée sous a) et b) effectue plusieurs circuits de brassage à travers un dispositif d'homogénéisation ;

e) la suspension citée sous b), homogénéisée, est dirigée sur une colonne à réaction équipée d'un dispositif d'acheminement où l'on provoque sa réaction pendant un temps de séjour de 70 à 180 minutes, à la température de 30 à 120 °C et sous une pression maximum de 10 bars ;

f) la suspension citée sous e), sortant de la colonne à réaction, est dirigée sur un dispositif de refroidissement, avant d'être confiée finalement aux usines de transformation.

2. Procédé selon la revendication 1, caractérisé en ce que la suspension obtenue sous b) contenant la cellulose déjà partiellement éthérifiée subit dans au moins une autre installation résistant à la pression manométrique, une réaction à la température maximum de 40 °C, sous une pression maximum de 3 bars et pendant une durée de séjour de 15 à 90 minutes, aboutissant à un degré de substitution compris entre 0,5 et 1,5.

3. Procédé selon la revendication 2, caractérisé en ce que dans l'une au moins des installations résistant à la pression, on ajoute à la suspension, soit sous une forme liquide, soit sous une forme dissoute, un autre agent d'éthérification et/ou un agent modificateur.

4. Procédé selon l'une des revendications 1 à 3 caractérisé en ce que la suspension obtenue dans les conditions précisées sous a) se compose de :

```
      1    partie en poids de cellulose
0,2 à 0,4  partie en poids d'hydroxyde alcalin
      6  à 8    parties en poids de solvant organique et
1,0 à 2,1  parties en poids d'eau.
```

5. Procédé selon l'une des revendications 1 à 4, caractérisé en ce que la fraction de l'agent d'éthérification ou la fraction constituée par l'ensemble des agents d'éthérification mentionnée sous c) et définie sous a) et b) se situe entre 0,6 et 2,0 parties en poids rapportées à 1 partie en poids de cellulose.

6. Procédé selon l'une des revendications 1 à 5, caractérisé en ce que, dans la phase e), la température de la suspension, qui atteint 40 °C au maximum à son arrivée dans la première partie du réacteur à colonnes, est portée à 60 °C au maximum pendant son temps de séjour compris entre 30 et 90 minutes, avant d'être portée, dans la deuxième partie de ce réacteur à colonnes, à une température comprise entre 60 et 120 °C pendant la deuxième période de séjour comprise entre 40 et 90 minutes, sous une pression maximum de 5 bars.

7. Procédé selon l'une des revendications 1 à 6, caractérisé en ce que le temps de séjour global dans le réacteur à colonnes est compris entre 90 et 140 minutes.

8. Procédé selon l'une des revendications 1 à 7, caractérisé en ce qu'un ou plusieurs agents supplémentaires d'éthérification et/ou de modification sont ajoutés à la suspension, soit dans la phase e), soit avant cette phase e).

9. Procédé selon l'une des revendications 1 à 8, caractérisé en ce que l'agent d'éthérification visé sous b) est de l'oxyde d'éthylène.

10. Procédé selon l'une des revendications 1 à 9, caractérisé en ce que l'agent d'éthérification visé sous a) est de l'acide monochloracétique, ou l'un de ses sels, ou de l'oxyde de propylène.

11. Dispositif en vue de la mise en œuvre du procédé selon l'une ou plusieurs des revendications 1 à 10, caractérisé par :

g) une installation (5) fonctionnant sous pression atmosphérique, équipée d'un agitateur (10) et assurant l'alcalinisation de la cellulose ;

h) une installation (15, 17) au moins, fonctionnant sous pression manométrique, équipée d'un agitateur (10) et assurant l'éthérification partielle et/ou, le cas échéant, la modification de la cellulose ;

i) des installations (12) assurant le brassage de chacune des suspensions à l'aide d'homogénéisateurs (11), dont l'une de ces installations (12) et l'un des homogénéisateurs (11) sont coordonnés à l'une des installations (5, 15, 17) qui assurent tant l'alcalinisation, l'éthérification et/ou la modification que le brassage des suspensions dans les circuits appropriés ;

k) un réacteur à colonnes, comportant plusieurs colonnes (18, 20, 24), qui assure la régulation de la température de la suspension au travers d'un revêtement (34) et qui termine le processus d'éthérification de la cellulose ;

l) une installation (27) assurant le refroidissement de la suspension provenant de la dernière colonne (24) du réacteur et des conduites de raccordement reliant les équipements g à l.

12. Dispositif selon la revendication 11, caractérisé en ce que la première colonne (18) du réacteur est équipée d'un mélangeur d'homogénéisation (33) sans effet d'acheminement, alors que les autres colonnes (20, 24) du réacteur sont équipées d'un dispositif d'acheminement (21).

13. Dispositif selon l'une des revendications 11 ou 12, caractérisé en ce que le rapport de la longueur des colonnes du réacteur à leur diamètre se situe entre 10 et 200 à l et, de préférence, entre 20 et 100 à l.

14. Dispositif selon l'une des revendications 11 à 13, caractérisé en ce que les homogénéisateurs (11) assurent également le pompage de suspension dans les circuits de brassage.

0 022 923